# EUROPÄISCHE PATENTSCHRIFT

(11) **EP 1 759 126 B1**
(45) Veröffentlichungstag und Bekanntmachung des Hinweises auf die Patenterteilung: **01.12.2010**
(21) Anmeldenummer: 05747187.2
(22) Anmeldetag: 13.05.2005
(51) Int. Cl.: F16D 65/097

(54) **SCHEIBENBREMSE MIT FEDERANORDNUNG**
DISK BRAKE WITH A SPRING ARRANGEMENT
FREIN A DISQUE POURVU D'UN SYSTEME ELASTIQUE

(30) Priorität: 04.06.2004 DE 102004027401; 27.12.2004 DE 102004062731
(43) Veröffentlichungstag der Anmeldung: 07.03.2007
(73) Patentinhaber: Continental Teves AG & Co. oHG, 60488 Frankfurt am Main (DE)
(72) Erfinder: BACH, Uwe, 65527 Niedernhausen (DE); BUNGERT, Hans, 65366 Geisenheim (DE); BAUER, Jürgen, 65187 Wiesbaden (DE); SEFO, Ahmed, 60488 Frankfurt am Main (DE)
(86) Internationale Anmeldenummer: PCT/EP2005/052197
(87) Internationale Veröffentlichungsnummer: WO 2005/119082

(56) Entgegenhaltungen:
- DE-A1- 10 238 734
- US-A1- 2004 195 057
- PATENT ABSTRACTS OF JAPAN Bd. 006, Nr. 004 (M-106), 12. Januar 1982 (1982-01-12) -& JP 56 127830 A (TOYOTA MOTOR CORP; others: 01), 6. Oktober 1981 (1981-10-06)
- PATENT ABSTRACTS OF JAPAN Bd. 2000, Nr. 11, 3. Januar 2001 (2001-01-03) -& JP 2000 220670 A (TOKICO LTD), 8. August 2000 (2000-08-08)
- PATENT ABSTRACTS OF JAPAN Bd. 1997, Nr. 02, 28. Februar 1997 (1997-02-28) -& JP 08 261261 A (NISSAN MOTOR CO LTD), 8. Oktober 1996 (1996-10-08)

## Beschreibung

Die Erfindung betrifft eine Scheibenbremse mit Bremsbelägen, die beiderseits einer Bremsscheibe innerhalb von Führungsabschnitten der Scheibenbremse verschiebbar aufgenommen sind, sowie mit einer Federanordnung zur Befederung der Bremsbeläge. Derartige Scheibenbremse kommen häufig bei Kraftfahrzeugen zum Einsatz.

So ist aus der gattungsbildenden DE 102 33 446 A1 ein Bremshalter einer Schwimmsattel-Scheibenbremse mit Bremsbelagführungsfeder bekannt, wobei die Bremsbelagführungsfeder am Bremshalter verrastet ist. Die Bremsbelagführungsfeder erstreckt sich zwischen dem Bremshalter und dem jeweiligen Bremsbelag und sorgt damit für eine leichtgängige Verschiebbarkeit der Bremsbeläge. Gleichzeitig besitzt die Bremsbelagführungsfeder Federarme, um die Bremsbeläge klapperfrei gegenüber dem Bremshalter zu verspannen. Die Federarme sind dabei derart gestaltet, dass sie eine radiale Bremsbelagmontage erlauben und anschließend die Bremsbeläge radial am Bremshalter verriegeln. Die montagefreundliche Federarmgestaltung gestattet jedoch nur eine begrenzte Freiheit bei der Einstellung der gewünschten Federkräfte auf die Bremsbeläge.

Das US-Patent US 5 249 647 beschreibt ferner eine Federanordnung für eine Scheibebremse, die eine Bremsbelagführungsfeder und eine Lüftspielfeder umfasst. Die Bremsbelagführungsfeder gewährleistet eine leichte Verschiebbarkeit der Bremsbeläge gegenüber dem Bremshalter. Außerdem werden die Bremsbeläge mittels der Bremsbelagführungsfeder radial gegenüber dem Bremshalter verriegelt. Hingegen dient die Lüftspielfeder der axialen Rückstellung der Bremsbeläge nach einer Bremsbetätigung. Damit werden die Bremsbeläge außerhalb einer Bremsbetätigung von einer zugehörigen Bremsscheibe entfernt, um ein definiertes Lüftspiel zwischen Bremsbelag und Bremsscheibe einzustellen. Die beschriebene Federanordnung erweist sich jedoch hinsichtlich der Montage, vor allem auch der Bremsbeläge, als unvorteilhaft.

Ausgehend davon ist es die Aufgabe der Erfindung, eine Federanordnung zur Bremsbelagbefederung bei einer Scheibenbremse vorzuschlagen, die bei einfachem Aufbau je nach Anwendungsfall eine individuelle Gesamtbefederung der Bremsbeläge gegenüber der Scheibenbremse erlaubt.

Gelöst wird diese Aufgabe durch eine Scheibenbremse nach Patentanspruch 1. Vor allem besteht die Möglichkeit die einzelnen Federelemente als separate Bauteile auszuführen, die innerhalb einer gemeinsamen Federanordnung zusammenwirken. Jedes Federelement kann demzufolge zielgerichtet auf seine Funktion hin ausgelegt und gestaltet werden.

Eine vorteilhafte Ausführung der Scheibenbremse dadurch erreicht, dass das Radialfederelement ortsfest an zumindest einem Führungsabschnitt befestigt ist. Dabei sind die Führungsabschnitte entweder an einem Bremssattel oder an einem Bremshalter angeformt. Die Befestigung des Radialfederelements kann beispielsweise über eine Verastung oder unter Zuhilfenahme eines geeigneten Befestigungsmittels erfolgen. Die Bremsbeläge werden schließlich über das derart fixierte Radialfederelement radial gegenüber dem Bremssattel bzw. dem Bremshalter verspannt. Über eine entsprechende Gestaltung des Radialfederelements wird somit die leichtgängige Verschiebbarkeit der Bremsbeläge in den Führungsabschnitten sichergestellt.

Eine weitere sinnvolle Ausführung der Federanordnung ergibt sich dadurch, dass sich das Axialfederelement an Bremsbelägen auf beiden Bremsscheibenseiten abstützt und zusammen mit den Bremsbelägen gegenüber den Führungsabschnitten verschiebbar ist. Insbesondere sind zwei Axialfederelemente vorgesehen, die sich jeweils an zwei Bremsbelägen abstützen, und somit bei Beendigung der Bremsbetätigung für die Einstellung des gewünschten Lüftspiels sorgen. Die Axialfederelemente verschieben sich also zusammen mit den Bremsbelägen innerhalb der Führungsabschnitte. Dadurch ergibt sich für die Bremsbeläge zusammen mit den Axialfederelementen eine vorteilhaft schwimmende Anordnung. Zur lösbaren Befestigung der Axialfederelemente an den Bremsbelägen sind spezielle Aufnahmen vorgesehen, in die die Axialfederelemente jeweils eingehakt sind. Eine solche Aufnahme ist entweder direkt an den Bremsbelag angeformt oder aber an einem separaten Bauteil ausgebildet, das wiederum am Bremsbelag befestigt ist. Ein solches separates Bauteil ist vorzugsweise als Blechelement mit einer ösenförmigen Aufnahme ausgebildet. Die ösenförmige Aufnahme kann auch in ein Dämpfungsblech integriert sein, welches an einer Rückenplatte des Bremsbelags befestigt ist.

Zur wirkungsvollen tangentialen Bremsbelagbefederung ist zumindest ein Tangentialfederelement am Bremsbelag befestigt und erstreckt sich mit einem Federabschnitt zwischen dem Bremsbelag und dem Führungsabschnitt. Der Federabschnitt sorgt für eine tangential klapperfreie Verspannung der Bremsbeläge gegenüber den Führungsabschnitten, um beispielsweise unerwünschte Bremsgeräusche bei Fahrtrichtungswechsel (Klacken der Bremsbeläge) zu verhindern. Gleichzeitig wird infolge der Tangentialfederelemente bewusst ein Tangentialspiel zwischen den Bremsbelägen und den Führungsabschnitten zugelassen. Das Tangentialspiel gestattet während des Bremsenbetriebs eine geringfügige Tangentialbewegung der Bremsbeläge, was sich vorteilhaft auf die Korrosionsbeständigkeit der Bremsbelagführung auswirkt. Dabei bildet das am Bremsbelag befestigte Tangentialfederelement insbesondere eine Aufnahme, in die das Axialfederelement eingehakt ist. Dazu ist beispielsweise ein Abschnitt des Tangentialfederelements ösenförmig gestaltet. Für das Axialfederelement entfällt somit eine separat vorzusehende Befestigungsstelle am Bremsbelag. Damit gestaltet sich die lösbare Befestigung des Axialfederelements als fertigungstechnisch vorteilhaft. Insgesamt sind demnach sowohl das Axial- als auch das Tangentialfederelement zusammen mit den Bremsbelägen schwimmend gegenüber den Führungsabschnitten verschiebbar. Gemäß einer weiterentwickelten Variante ist an jedem Bremsbelag genau ein Tangentialfederelement befestigt. Damit kann jeder Bremsbelag gezielt in eine bestimmte Tangentialrichtung vorgespannt werden, beispielsweise entgegen der Hauptrotationsrichtung der Bremsscheibe, d. h. etwa bei Vorwärtsfahrt des Kraftfahrzeugs. In einem solchen Fall wird jeder Bremsbelag bei Vorwärtsbremsung innerhalb seines Tangentialspiels bewegt, was die Entstehung von Korrosionsprodukten im Führungsabschnitt erschwert.

Eine besonders vorteilhafte Ausführung der Scheibenbremse mit Federanordnung ergibt sich dadurch, dass die Scheibenbremse einen ortsfesten Bremshalter mit Führungsabschnitten aufweist, an dem das Radialfederelement lösbar verrastet ist. Bei einer solchen Schwimmsattel-Scheibenbremse ist am Bremshalter ein Schwimmsattel verschiebbar gelagert. Mittels der Federanordnung sind die Bremsbeläge in drei Dimensionen gegenüber dem Bremshalter bzw. untereinander vorgespannt.

Weitere sinnvolle Detailmerkmale der Erfindung sind den Ausführungsbeispielen in den Figuren zu entnehmen, die im folgenden näher erläutert werden.

Es zeigt:
- Fig. 1: einen Bremshalter einer Scheibenbremse mit Federanordnung für die Bremsbeläge in mehreren Ansichten;
- Fig. 2: den Bremshalter aus Figur 1 mit Radialfederelement in einer räumlichen Ansicht; und
- Fig. 3: den Bremshalter aus Figur 1 mit Bremsbelägen sowie Axial- und Tangentialfederelement in einer räumlichen Ansicht.

Der in den Figuren dargestellte Bremshalter 1 ist Bestandteil eine Schwimmsattel-Scheibenbremse, wie sie häufig innerhalb von Kraftfahrzeugbremsanlagen zum Einsatz kommt. Dabei wirkt der Bremshalter 1 mit einem zugehörigen, jedoch nicht gezeigten Schwimmsattel zusammen, der axial verschiebbar am Bremshalter 1 gelagert ist. Der Bremshalter 1 besitzt einen Basisabschnitt 2 mit Befestigungslöchern 3, über die er ortsfest bzw. fahrzeugfest montiert werden kann. An den Basisabschnitt 2 schließen sich axial verlaufende Halterarme 4 an, die eine zugehörige Bremsscheibe axial überragen. Zur Erhöhung der Bremshaltersteifigkeit sind die Enden der Halterarme 4 gegenüberliegend zum Basisabschnitt 2 mit einem Steg 5 verbunden. An den Halterarmen 4 sind Führungsabschnitte 6 ausgebildet zur Aufnahme von Bremsbelägen 7, die ihrerseits verschiebbar am Bremshalter 1 angeordnet sind. Innerhalb der Führungsabschnitte 6 ist jeder Bremsbelag 7 jeweils mit seitlichen Ansätzen 8 sowohl axial verschiebbar geführt als auch tangential abgestützt, um beim Bremsenbetrieb auftretende Bremsumfangskräfte auf den Bremshalter 1 übertragen zu können. Hierbei beziehen sich die Richtungsangaben grundsätzlich auf die Achse der zugehörigen Bremsscheibe.

Zur umfassenden klapperfreien Verspannung der Bremsbeläge 7 am Bremshalter 1 sowie zum Erzielen von weiteren vorteilhaften Federeinwirkungen ist eine Federanordnung 10 vorgesehen, die mehrere Federfunktionen erfüllt. Dazu umfasst die Federanordnung mehrere Federelemente.

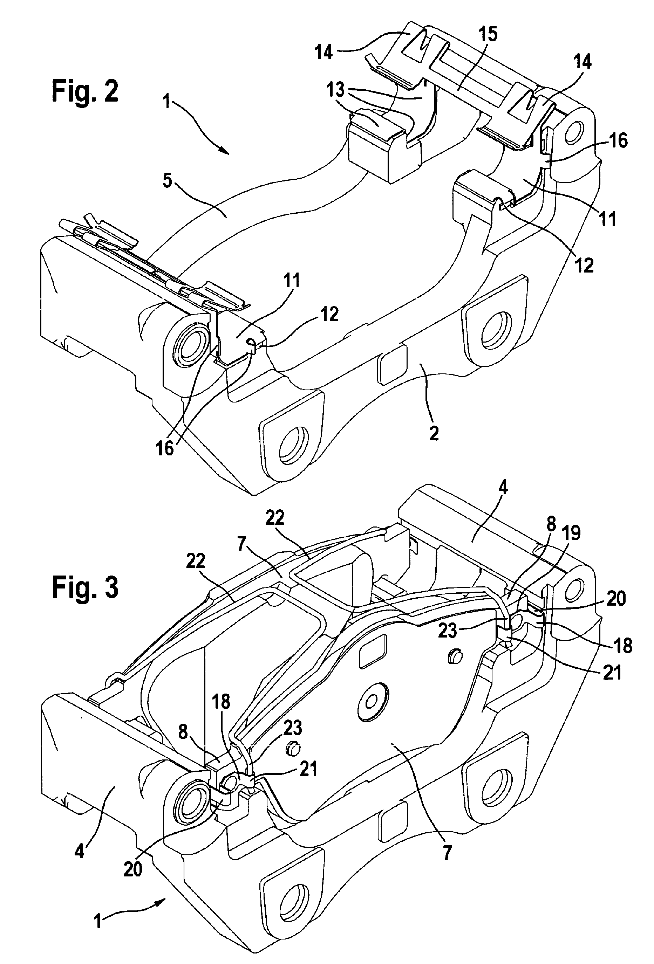

Zunächst weist die Federanordnung 10 an jedem Halterarm 4 ein Radialfederelement 11 auf, wie es insbesondere auch Figur 2 zu entnehmen ist. Dabei zeigt Figur 2 einen Bremshalter 1 im vormontierten Zustand. In diesem vormontierten Zustand sind lediglich die Radialfederelemente 11 an den Halterarmen 4 befestigt. Die Bremsbeläge 7 sind noch nicht am Bremshalter 1 angeordnet. Das Radialfederelement 11 ist mittels mehrerer Laschen 12 ortsfest am Halterarm 4 bzw. Führungsabschnitt 6 befestigt. Dabei erstreckt sich das Radialfederelement 10 jeweils zwischen dem Führungsabschnitt 6 am Halterarm 4 und dem seitlichen Ansatz 8 des Bremsbelags 7. In diesem Zusammenhang bildet das Radialfederelement 10 Führungs- bzw. Abstützflächen 13 für die Bremsbeläge 7, an denen die seitlichen Ansätze 8 der Bremsbeläge 7 radial und tangential geführt bzw. abgestützt werden. Das Radialfederelement 10 verhindert damit einen direkt Kontakt zwischen Bremsbelag 7 und Bremshalter 1. Durch entsprechende Gestaltung des Radialfederelements 10 oder seiner Oberfläche kann somit die leichtgängige Verschiebbarkeit der Bremsbeläge 7 positiv beeinflusst werden. Um die Bremsbelagmontage zu vereinfachen sind außerdem Zungen 16 angeformt, die geneigt zu den Führungs- bzw. Abstützflächen 13 verlaufen und somit eine Einführhilfe bei der axialen Bremsbelagmontage bilden. Zur radialen Befederung der Bremsbeläge 7 umfasst das Radialfederelement 10 Federarme 14, die jeweils unter radialer Vorspannung am seitlichen Ansatz 8 eines Bremsbelags 7 anliegen. Damit werden die Bremsbeläge 7 gegenüber dem Bremshalter 1 gleichzeitig radial verriegelt und außerdem noch spielfrei verspannt. Die Federarme 14 sind vorzugsweise mittels einer Strebe 15 miteinander verbunden. Dies verhindert eine unerwünschte Verdrehung der Federarme 14 infolge einer axialen Bremsbelagverschiebung. Das Radialfederelement 10 ist vorteilhaft aus einem Blechzuschnitt geformt, kann aber auch aus einem anderen geeigneten Material bestehen.

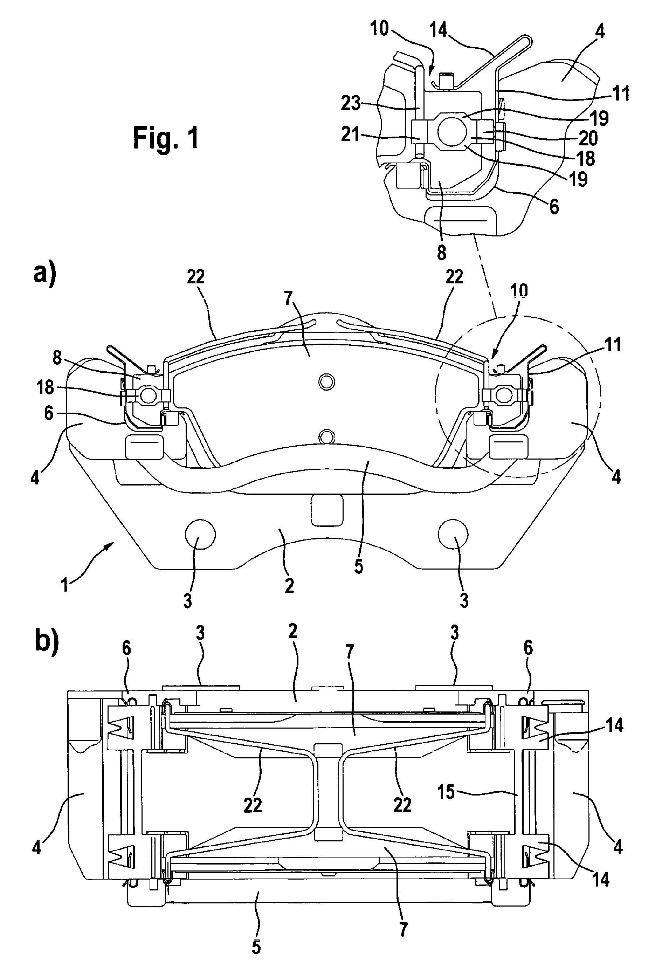

Darüber hinaus weist die Federanordnung 10 zumindest ein Tangentialfederelement 18 auf, um die Bremsbeläge 7 in Umfangsrichtung klapperfrei gegenüber dem Bremshalter 1 zu verspannen. Ein solches Tangentialfederelement 18 ist insbesondere in den Figuren 1a und 3 verdeutlicht. Danach ist jedes Tangentialfederelement 18 im wesentlichen als Federblechstreifen ausgeführt, der mit einem Befestigungsabschnitt 19 verliersicher mit dem Bremsbelag 7 verbunden ist. Im konkreten Ausführungsbeispiel ist der Befestigungsabschnitt 19 am seitlichen Bremsbelagansatz 8 vernietet. Alternativ sind auch andere geeignete Befestigungsarten denkbar. Damit ist das Tangentialfederelement 18 fest an den Bremsbelag 7 gekoppelt und verschiebt sich während des Bremsenbetriebs zusammen mit diesem innerhalb des Bremshalters 1. Grundsätzlich sind die Bremsbeläge 7 mit Tangentialspiel in den Führungsabschnitten 6 aufgenommen, so dass sie sich unter Bremsumfangslast geringfügig tangential bewegen können. Diese Tangentialbewegung verstärkt die Unterdrückung von Korrosion in der Bremsbelagführung. Zur Tangentialbefederung umfasst das Tangentialfederelement 18 einen Federabschnitt 20, der zwischen dem Bremsbelag 7 und dem Führungsabschnitt 6 bzw. der Führungs-/Abstützfläche 13 am Radialfederelement 11 verläuft. Nach dem Ausführungsbeispiel in den Figuren sind zu beiden Seiten der Bremsbeläge 7 Tangentialfederelemente 18 angebracht, so dass die Bremsbeläge ,schwimmend' in einer Mittellage zwischen den Halterarmen 4 positioniert werden. Alternativ dazu ist es ebenso möglich am Bremsbelag 7 nur einseitig ein Tangentialfederelement 18 vorzusehen und somit den Bremsbelag 7 bewusst in eine Tangentialrichtung vorzuspannen. Beispielsweise ist es sinnvoll die Bremsbeläge 7 entgegen der Hauptdrehrichtung der zugehörigen Bremsscheibe, d. h. bei Vorwärtsfahrt, tangential im Bremshalter 1 vorzuspannen. Für einen solchen Fall erfolgt bei jeder Bremsbetätigung eine für die Korrosionsvermeidung günstige Tangentialbewegung der Bremsbeläge 7.

Um für die Scheibenbremse ein gutes Lüftverhalten der Bremsbeläge 7 gegenüber der Bremsscheibe zu erreichen, besitzt die Federanordnung 10 zumindest ein Axialfederelement 22, wie es insbesondere in den Figuren 1 und 3 zu erkennen ist. Im konkreten Ausführungsbeispiel nach den Figuren sind zwei symmetrisch angeordnete Axialfederelemente 22 aus Federdraht vorgesehen, die im wesentlichen U-förmig gestaltet sind und mit ihrem freien Enden 23 jeweils am Bremsbelag 7 lösbar befestigt sind. Beispielsweise können die freien Enden 23 unmittelbar in den Bremsbelag 7 eingehakt sein. Die Axialfederelemente 22 sind an die Axialverschiebung der Bremsbeläge 7 gekoppelt und somit gegenüber dem Bremshalter 1 verschiebbar. Damit wird unabhängig vom Verschleißzustand der Bremsbeläge 7 eine nahezu konstante axiale Federkraft erreicht. Gemäß einer fertigungs- sowie montagetechnisch günstigen Ausführung ist jeweils am Tangentialfederelement 18 eine ösenförmige Aufnahme 21 vorgesehen, in die das freie Ende 23 des Axialfederelements 22 eingehakt werden kann. Damit entfällt zusätzlicher Fertigungsaufwand am Bremsbelag. Alternativ ist es gemäß einer nicht gezeigten Variante ebenso denkbar, die ösenförmige Aufnahme 21 an einem sonstigen Blechelement auszubilden, welches seinerseits am Bremsbelag 7 befestigt ist. Insbesondere ist es möglich die ösenförmige Aufnahme 21 an einem am Bremsbelag 7 befestigten Dämpfungsblech zu befestigen. Im einzelnen üben die U-förmigen Axialfederelemente 22 eine axiale Federkraft aus, die die Bremsbeläge 7 axial auseinander zu drücken sucht, damit sich das gewünschte Lüftspiel zwischen der Bremsscheibe und den Bremsbeläge 7 einstellen kann. Dabei erstrecken sich die Axialfederelemente 22 nahezu im Umfangrichtung der Bremsscheibe und benötigen demnach nur wenig Bauraum. Im beschriebenen Ausführungsbeispiel nach den Figuren werden die Axialfederelemente 1 innerhalb der Scheibenbremse vom nicht gezeigten Schwimmsattel übergriffen, an dem sich die Axialfederelemente 22 auch radial abstützen.

Grundsätzlich sind die drei separaten Federelemente 11, 18, 22 der Federanordnung 10 mit ihren unterschiedlichen Federkraftkomponenten unabhängig voneinander und können somit gezielt auf die jeweilige Teilaufgabe hin ausgelegt werden. Eine Kombination der drei Federelemente 10, 18, 22 ergibt jedoch hinsichtlich der Funktion eine vorteilhafte Gesamtbefederung für die Bremsbeläge 7.

Die Federanordnung 10 mit mehreren Federelementen 11, 18, 22 liefert aufgrund der verwendeten, einfach gestalteten Einzelteile eine kostengünstige Lösung, die außerdem noch montagefreundlich ist. Weiterhin zeichnet sich die vorliegende Federanordnung 10 durch niedriges Gewicht sowie das günstige Korrosionsverhalten, insbesondere zwischen Bremsbelag 7 und Bremshalter 1 bzw. den Führungs/Abstützflächen 13 aus. Insgesamt liefert die beschriebene Federanordnung 10 eine äußerst robuste Gestaltung der einzelnen Federelemente 11, 18, 22 sowie der sonstigen Komponenten der Scheibenbremse, die sich in einer geringen Fehleranfälligkeit selbst bei extremen Betriebsbedingungen (z. B. bei Off-Road-Einsatz) äußert.

Die neuerungsgemäße Federanordnung 10 wurde zwar am Ausführungsbeispiel einer Schwimmsattel-Scheibenbremse mit Bremshalter 1 erläutert, ist aber allgemein auch bei anderen Bauformen von Scheibenbremsen verwendbar. So können derartige Federanordnungen 10 bei allen Scheibenbremsen zum Einsatz kommen, bei denen Bremsbeläge 7 innerhalb von Führungsabschnitten 6 in der Scheibenbremse verschiebbar gelagert sind.

## Patentansprüche

1. Scheibenbremse mit Bremsbelägen mit seitlichen Ansätzen (8) und einem Bremshalter (1), wobei die Ansätze (8) in Führungsabschnitten (6) von Halterarmen (4) des Bremshalters (1) verschiebbar geführt aufgenommen und radial sowie tangential abgestützt sind, um beim Bremsbetrieb auftretende Bremskräfte auf die Halterarme (4) von dem Bremshalter (1) übertragen zu können, und mit einer Federanordnung (10) zur Beaufschlagung des Bremsbelags (7) mit Federkraft, wobei ein Radialfederelement (11) einer Federanordnung (10) zur radialen Vorspannung des Bremsbelags (7) in Richtung Führungsabschnitt (6) vorgesehen ist, wobei das Radialfederelement (11) zumindest abschnittsweise jeweils zwischen einem Ansatz (8) vom Bremsbelag (7) und einem Führungsabschnitt (6) von dem Bremshalter (1) angeordnet ist, und Führungs- und Abstützflächen (13) für eine radiale und tangentiale Abstützung der Ansätze (8) aufweist, so dass ein direkter Kontakt zwischen dem Bremsbelag (7) und dem Führungsabschnitt (6) verhindert ist, und wobei das Radialfederelement (11) einen Federarm (14) aufweist, der radial außen unter radialer Vorspannung am Ansatz (8) des Bremsbelags (7) anliegt, **dadurch gekennzeichnet, dass** am Radialfederelement (11) Zungen (16) angeformt sind, die geneigt zu den Führungs- und Abstützflächen (13) verlaufen, und eine Einführhilfe bei der axialen Bremsbelagmontage bilden.

2. Scheibenbremse nach Anspruch 1, **dadurch gekennzeichnet, dass** das Radialfederelement (11) ortsfest an zumindest einem Führungsabschnitt (6) befestigt ist, und die Federanordnung (10) zumindest ein Axialfederelement (22) zur axialen Verspannung der Bremsbeläge (7) untereinander aufweist.

3. Scheibenbremse nach Anspruch 2, **dadurch gekennzeichnet, dass** das Axialfederelement (22) sich an Bremsbelägen (7) auf beiden Bremsscheibenseiten abstützt und zusammen mit diesen gegenüber den Führungsabschnitten (6) verschiebbar ist.

4. Scheibenbremse nach Anspruch 3, **dadurch gekennzeichnet, dass** das Axialfederelement (22) in einer am Bremsbelag (7) befestigten Aufnahme (21) eingehakt ist.

5. Scheibenbremse nach Anspruch 4, **dadurch gekennzeichnet, dass** die Aufnahme (21) in ein am Bremsbelag (7) befestigtes Blechelement integriert ist.

6. Scheibenbremse nach einem der vorhergehenden Ansprüche, **dadurch gekennzeichnet, dass** die Federanordnung (10) zumindest ein Tangentialfederelement (18) zur tangentialen Verspannung der Bremsbeläge (7) gegenüber den Führungsabschnitten (6) umfasst.

7. Scheibenbremse nach einem der vorhergehenden Ansprüche, **dadurch gekennzeichnet, dass** das Tangentialfederelement (18) am Bremsbelag (7) befestigt ist und sich mit einem Federabschnitt (20) zwischen dem Bremsbelag (7) und dem Führungsabschnitt (6) erstreckt.

8. Scheibenbremse nach den Ansprüchen 6, 7, **dadurch gekennzeichnet, dass** das Tangentialfederelement (18) eine Aufnahme (21) bildet, in die das Axialfederelement (22) eingehakt ist.

9. Scheibenbremse nach Anspruch 7, **dadurch gekennzeichnet, dass** an jedem Bremsbelag (7) genau ein Tangentialfederelement (18) befestigt ist.

10. Scheibenbremse nach einem der vorhergehenden Ansprüche, **dadurch gekennzeichnet, dass** die Scheibenbremse einen ortsfesten Bremshalter (1) mit Führungsabschnitten (6) aufweist, an dem das Radialfederelement (11) lösbar verrastet ist.

## Claims

1. Disc brake having brake pads with lateral projections (8) and having a brake holder (1), with the projections (8) being held in a slidingly guided manner and supported radially and tangentially in guide sections (6) of holder arms (4) of the brake holder (1) in order to be able to transmit braking forces occurring during braking operation to the holder arms (4) of the brake holder (1), and having a spring arrangement (10) for exerting spring force on the brake pad (7), with a radial spring element (11) of a spring arrangement (10) being provided for radially preloading the brake pad (7) in the direction of the guide section (6), with the radial spring element (11) being arranged at least in sections in each case between a projection (8) of the brake pad (7) and a guide section (6) of the brake holder (1), and having guide and support surfaces (13) for radial and tangential support of the projections (8), such that direct contact between the brake pad (7) and the guide section (6) is prevented, and with the radial spring element (11) having a spring arm (14) which bears radially outwardly under radial preload against the projection (8) of the brake pad (7), **characterized in that** tongues (16) are integrally formed on the radial spring element (11), which tongues (16) run obliquely with respect to the guide and support surfaces (13) and form an insertion aid during the axial mounting of the brake pads.

2. Disc brake according to Claim 1, **characterized in that** the radial spring element (11) is fastened in a positionally fixed manner to at least one guide section (6), and the spring arrangement (10) has at least one axial spring element (22) for bracing the brake pads (7) with respect to one another axially.

3. Disc brake according to Claim 2, **characterized in that** the axial spring element (22) is supported on brake pads (7) on both sides of the brake disc, and is movable together with said brake pads (7) with respect to the guide sections (6).

4. Disc brake according to Claim 3, **characterized in that** the axial spring element (22) is hooked into a receptacle (21) fastened to the brake pad (7).

5. Disc brake according to Claim 4, **characterized in that** the receptacle (21) is integrated into a sheet-metal element fastened to the brake pad (7).

6. Disc brake according to one of the preceding claims, **characterized in that** the spring arrangement (10) comprises at least one tangential spring element (18) for bracing the brake pads (7) tangentially with respect to the guide sections (6).

7. Disc brake according to one of the preceding claims, **characterized in that** the tangential spring element (18) is fastened to the brake pad (7) and extends with a spring section (20) between the brake pad (7) and the guide section (6).

8. Disc brake according to Claims 6, 7, **characterized in that** the tangential spring element (18) forms a receptacle (21) into which the axial spring element (22) is hooked.

9. Disc brake according to Claim 7, **characterized in that** precisely one tangential spring element (18) is fastened to each brake pad (7).

10. Disc brake according to one of the preceding claims, **characterized in that** the disc brake has a positionally fixed brake holder (1) with guide sections (6) onto which the radial spring element (11) is releasably latched.

## Revendications

1. Frein à disque pourvu de garnitures de frein munies d'éléments rapportés latéraux (8) et d'un support de frein (1), les éléments rapportés (8) étant reçus de manière guidée à coulissement dans des portions de guidage (6) de bras de retenue (4) du support de frein (1), et étant supportés radialement et tangentiellement, afin de pouvoir transmettre les forces de freinage se produisant en mode de freinage aux bras de support (4) depuis le support de frein (1), et comprenant un agencement de ressort (10) pour solliciter la garniture de frein (7) par une force de ressort, un élément de ressort radial (11) d'un agencement de ressort (10) étant prévu pour la précontrainte radiale de la garniture de frein (7) dans la direction de la portion de guidage (6), l'élément de ressort radial (11), étant disposé, au moins en partie, à chaque fois entre un élément rapporté (8) de la garniture de frein (7) et une portion de guidage (6) du support de frein (1), et des surfaces de guidage et de support (13) en vue d'un support radial et tangentiel des éléments rapportés (8), de sorte qu'un contact direct entre la garniture de frein (7) et la portion de guidage (6) soit empêché, et l'élément de ressort radial (11) présentant un bras de ressort (14), qui s'applique radialement à l'extérieur sous précontrainte radiale contre l'élément rapporté (8) de la garniture de frein (7), **caractérisé en ce que** des langues (16) sont façonnées sur l'élément de ressort radial (11), lesquelles s'étendent de manière inclinée vers les surfaces de guidage et de support (13) et forment un auxiliaire d'insertion lors du montage axial des garnitures de frein.

2. Frein à disque selon la revendication 1, **caractérisé en ce que** l'élément de ressort radial (11) est fixé localement à au moins une portion de guidage (6), et l'agencement de ressort (10) présente au moins un élément de ressort axial (22) pour la contrainte axiale des garnitures de frein (7) les unes par rapport aux autres.

3. Frein à disque selon la revendication 2, **caractérisé en ce que** l'élément de ressort axial (22) s'appuie sur des garnitures de frein (7) des deux côtés du frein à disque et peut être déplacé conjointement avec celles-ci par rapport aux portions de guidage (6).

4. Frein à disque selon la revendication 3, **caractérisé en ce que** l'élément de ressort axial (22) est accroché dans un logement (21) fixé sur la garniture de frein (7).

5. Frein à disque selon la revendication 4, **caractérisé en ce que** le logement (21) est intégré dans un élément de tôle fixé sur la garniture de frein (7).

6. Frein à disque selon l'une quelconque des revendications précédentes, **caractérisé en ce que** l'agencement de ressort (10) comprend au moins un élément de ressort tangentiel (18) pour le serrage tangentiel des garnitures de frein (7) par rapport aux portions de guidage (6).

7. Frein à disque selon l'une quelconque des revendications précédentes, **caractérisé en ce que** l'élément de ressort tangentiel (18) est fixé sur la garniture de frein (7) et s'étend avec une portion de ressort (20) entre la garniture de frein (7) et la portion de guidage (6).

8. Frein à disque selon les revendications 6 et 7, **caractérisé en ce que** l'élément de ressort tangentiel (18) forme un logement (21) dans lequel l'élément de ressort axial (22) est accroché.

9. Frein à disque selon la revendication 7, **caractérisé en ce que** précisément un élément de ressort tangentiel (18) est fixé sur chaque garniture de frein (7).

10. Frein à disque selon l'une quelconque des revendications précédentes, **caractérisé en ce que** le frein à disques présente un support de frein fixe (1) avec des portions de guidage (6), sur lequel est encliqueté de manière amovible l'élément de ressort radial (11).
